# EUROPEAN PATENT SPECIFICATION

(11) **EP 4 026 708 B1**
(45) Date of publication and mention of the grant of the patent: **01.05.2024**
(21) Application number: 21199450.4
(22) Date of filing: 28.09.2021
(51) Int. Cl.: B60C 11/03, B60C 11/13, B60C 11/12

(54) **PNEUMATIC TIRE**
LUFTREIFEN
PNEUMATIQUE

(30) Priority: 06.01.2021 KR 20210001500
(43) Date of publication of application: 13.07.2022
(73) Proprietor: Kumho Tire Co., Inc., Gwangju 62392 (KR)
(72) Inventor: PARK, Chang Jung, 62392 Gwangju (KR); LEE, Jae Moon, 62392 Gwangju (KR); KIM, Tae Min, 62392 Gwangju (KR); KIM, Soo Min, 62392 Gwangju (KR)
(74) Representative: BCKIP Part mbB

(56) References cited:
- WO-A1-2015/100435
- WO-A1-2016/057149
- DE-A1-102006 031 779
- DE-A1-102007 016 930
- JP-A- 2012 116 339
- US-A1- 2005 126 670
- US-A1- 2011 203 709

## Description

### TECHNICAL FIELD

The present invention relates to a pneumatic tire, and more particularly, a pneumatic tire formed so that noise generated from a groove is reduced by disposing a noise reflector in the groove.

### BACKGROUND

Tires are mounted on a variety of vehicles, from small vehicles to heavy-duty vehicles, to support loads of the vehicles, and to perform a power transmission function that transmit power of the vehicles to the ground and a brake function, as well as functions for dampening vibrations and shocks from the ground that occur when the vehicles travel. In order to perform the functions of the tires, an internal air pressure is applied to the tires which play an important part in traveling and braking of the vehicles.

With the change of the times, a proportion of unpaved roads gradually decreases, vehicles without an internal combustion engine such as electric vehicles are popularized, and noise is recently being regarded as important among the main performance of tires.

The existing tire includes a tread portion in contact with a road surface, and a groove may be formed in the tread portion. The groove improves drainage. However, air flows in the groove as the vehicle travels, and thus, pipe resonance may be generated by the flowing air. There is a problem that the pipe resonance causes noise.
WO 2015/100435 A1 discloses various embodiments of a tire tread having one or more flexible gate apparatuses.
US 2005/126670 A1 discloses a tread for a pneumatic tire. The tread has a plurality of grooves. The grooves have a base defining the depth of the groove relative to the tread surface, opposing groove walls, and a centerline equidistance from the opposing groove walls. The groove may extend in either a circumferential or a lateral direction of the tread when the tread is applied to a pneumatic tire.
WO 2016/057149 A1 discloses various embodiments of a tire traction element. In one embodiment, a tire traction element is oriented in a circumferential groove of a tire to provide improved snow and/or mud traction.
US 2011/203709 A1 discloses a pneumatic vehicle tire that includes a tread rubber that is divided into tread elements, such as tread bars or circumferential ribs, by circumferential grooves and transverse grooves.
JP 2012-116339 A discloses a tire that has the circumferential groove composed of a pair of groove walls and a groove bottom part connecting lower ends of the groove walls; and a tread which includes a land part and has projecting parts of plate form disposed in the circumferential groove as a pair between the both-side groove walls.
DE 10 2007 016 930 A1 discloses a pneumatic vehicle tire, in particular, for commercial vehicles, with a number of circumferential grooves (2, 2') running in the circumferential direction, which have border edges (4, 4') running parallel to one another and straight in the circumferential direction on the tread periphery.

### SUMMARY

In view of the above, a pneumatic tire formed so that noise generated from a groove can be reduced is provided according toindependent claim 1. Further refinements are subject of the dependent claims.

In accordance with an embodiment sueful for understanding the present invention, there is provided a pneumatic tire for reducing noise including: a tread portion including: a tread surface for making contacting with a road surface; and a groove recessed inward from the tread surface and extending along a circumferential direction of the pneumatic tire; and a plurality of noise reflectors protruding from the groove and disposed spaced apart from each other along the circumferential direction of the pneumatic tire, wherein the groove includes: a groove bottom surface spaced apart by a predetermined distance from the tread surface in a radial direction of the pneumatic tire; and a plurality of groove side surfaces connected to the groove bottom surface and each including a connection curved surface having a predetermined curvature, wherein each of the noise reflectors includes: a support surface supported by at least portions of the connection curved surface and the groove bottom surface; and a protrusion surface located on a side opposite to the support surface. The protrusion surface includes a first connection portion and a second connection portion which connect the support surface, and a portion of the protrusion surface is disposed to be spaced apart from the connection curved surface between the first connection portion and the second connection portion. The pneumatic tire may has a meridian plane passing through a center of the pneumatic tire and perpendicular to an axial direction of the tire, the plurality of groove side surface includes a first groove side surface and a second groove side surface, the first groove side surface and the second groove side surface are inclined so that an axial gap therebetween decreases as it goes to the groove bottom surface from the tread surface, and each of the first groove side surface and the second groove side surface extends to be inclined with respect to the meridian surface. An axial length of the noise reflector between the first connection portion and the second connection portion is 20% or more and 30% or less of a maximum distance between the first groove side surface and the second groove side surface (112) in the axial direction of the pneumatic tire, a radial height of the noise reflector between the first connection portion and the second connection portion in the radial direction is 65% or more and 75% or less of a length from the tread surface to the groove bottom surface in the radial direction of the pneumatic tire, and a separation distance between centers of the adjacent noise reflectors in the circumferential direction is 1 or more times and less than 2 times a thickness of the noise reflector in the circumferential direction.

The tread portion may further include a sipe recessed inward from the tread surface and extending in a direction deviating from an extension direction of the groove to be connected to the groove, and the noise reflector may be disposed to be spaced apart from the sipe in the circumferential direction of the pneumatic tire.

According to embodiments of the present invention, a noise reflector may be disposed in the groove of the pneumatic tire, and thus, noise generated by the groove may be reduced.

### BRIEF DESCRIPTION OF THE DRAWINGS

FIG. 1 is a plan view of a pneumatic tire according to a first embodiment of the present invention.
FIG. 2 is a perspective view of a noise reflector disposed in a groove according to the first embodiment of the present invention.
FIG. 3 is a cross-sectional view of the groove according to the first embodiment of the present invention.
FIG. 4 is a partial cross-sectional view of a pneumatic tire taken along line IV-IV of FIG. 1.
FIGS. 5A to 5C are cross-sectional views of the noise reflector according to the first embodiment of the present invention.
FIG. 6 is an enlarged view of K illustrated in FIG. 1.
FIG. 7 is a table illustrating a level of noise generated by the pneumatic tire according to the first embodiment of the present invention.
FIG. 8 is a graph illustrating a noise evaluation result of the pneumatic tire according to the first embodiment of the present invention.
FIG. 9 is a table illustrating results of evaluating drainage performance of the pneumatic tire according to the first embodiment of the present invention.
FIGS. 10A and 10B are cross-sectional views of side surfaces of a plurality of grooves of a pneumatic tire according to a second embodiment of the present invention.

### DETAILED DESCRIPTION

Hereinafter, specific embodiments for implementing the present invention will be described with reference to the accompanying drawings.

In describing the embodiments of the present invention, the detailed descriptions of well-known functions or configurations will be omitted if it is determined that the detailed descriptions of well-known functions or configurations may unnecessarily make obscure the present invention.

When an element is referred to as being 'connected' to, or 'contacted' with another element, it should be understood that the element may be directly connected to, or contacted with the other element, but that other elements may exist in the middle.

The terms used in the present application are only used for describing specific embodiments, and are not intended to limit the present invention. Singular expressions include plural expressions unless the context clearly indicates otherwise.

In addition, in the present application, expressions such as an upper side, a lower side, and a side surface are described with reference to the drawings, and it should be noted in advance that if the direction of the object is changed, it may be expressed differently. For the same reason, some components in the accompanying drawings are exaggerated, omitted, or schematically illustrated, and the size of each component does not entirely reflect the actual size.

The terms used herein, including ordinal numbers such as "first" and "second" may be used to describe, and not to limit, various components. The terms simply distinguish the components from one another.

The meaning of "including" as used in the specification specifies a specific characteristic, region, integer, step, action, element and/or component, but does not exclude the existence or addition of other specific characteristic, region, integer, step, action, element, component and/or group.

Meanwhile, a radial direction "R" described below means a radial direction of a tire. An axis may mean a rotation axis of the tire, and an axial direction "A" means a direction parallel to the rotation axis of the tire. The axial direction does not necessarily pass through a center of the rotation axis of the tire, and includes a direction parallel to an extension direction of the rotation axis of the tire. In addition, a circumferential direction "C" is a direction along an outer circumferential surface of the tire and means a direction perpendicular to the radial direction. The circumferential direction may be either the clockwise direction or counterclockwise direction when viewed from a side surface of the tire.

Meanwhile, unless otherwise specified, the directions include both positive and negative directions.

Hereinafter, a pneumatic tire 1 according to a first embodiment of the present invention will be described with reference to the drawings.

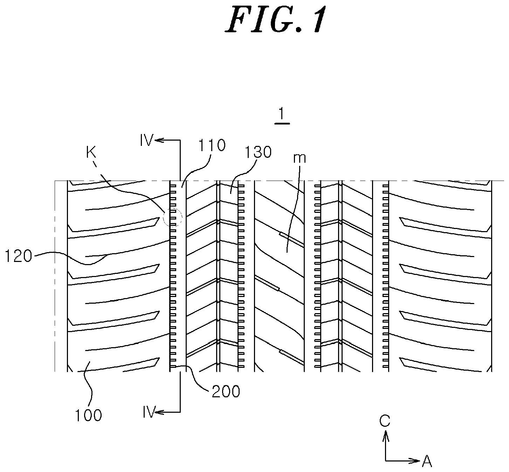

Referring to FIG. 1, the pneumatic tire 1 according to the first embodiment of the present invention includes a tread portion 100 and a noise reflector 200.

The tread portion 100 is disposed on an outer portion of the pneumatic tire 1, corresponds to a thick rubber layer having a configuration in which the road surface is directly grounded, and may be formed of a rubber material having strong cut, impact, and abrasion resistance to protect an inside of the tire. A surface of the tread portion 100 may extend toward a side wall (not illustrated) of the pneumatic tire 1 as a portion contacting the road surface. In addition, the tread portion 100 may include a groove 110 and a sipe 120 to improve water discharge performance, conditional friction performance, or the like.

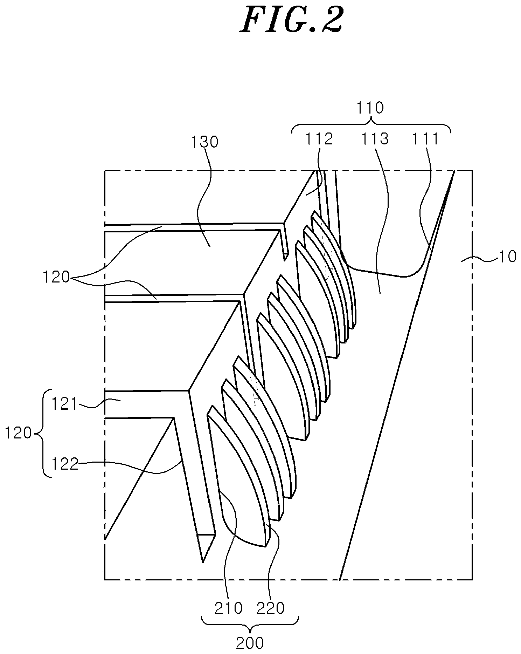

Referring further to FIG. 2, the groove 110 is recessed inward from the surface of the tread portion 100. The groove 110 may be formed in the circumferential direction or the axial direction of the pneumatic tire 1, or may be extended in a direction deviating from the circumferential direction or the axial direction of the pneumatic tire 1. Hereinafter, the groove 110 will be described on the basis of being formed in the circumferential direction, but is not limited thereto. In addition, the groove 110 may include a plurality of grooves 110 and the plurality of grooves 110 may be disposed to be spaced apart from each other. For example, the plurality of grooves 110 formed in the circumferential direction of the pneumatic tire 1 may be disposed to be spaced apart from each other in the axial direction of the pneumatic tire 1. In addition, a width of the groove 110 perpendicular to an extension direction of the groove 110 may be 1.1 mm or more. The groove 110 includes a plurality of groove side surfaces 111 and 112 and a groove bottom surface 113.

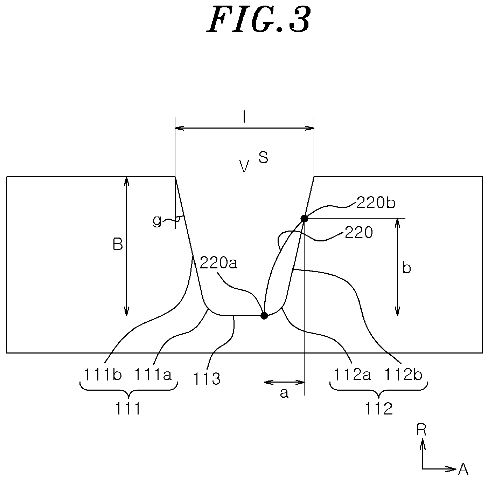

Referring further to FIG. 3, the plurality of groove side surfaces 111 and 112 is recessed from the surface of the tread portion 100. The plurality of groove side surfaces 111 and 112 are connected to the groove bottom surface 113 and portions connected to the groove bottom surface 113 have a predetermined curvature. The predetermined curvature may be equal to or less than R5 (5 mm), for example. In addition, the plurality of groove side surfaces 111 and 112 includes a first groove side surface 111 and a second groove side surface 112. The second groove side surface 112 may be disposed at a position more spaced apart from a center of the tread portion 100 than the first groove side surface 111. For example, in the plurality of groove side surfaces 111 and 112 of the groove 110, the second groove side surface 112 located on one side (left side of FIG. 1) in the axial direction of the pneumatic tire 1 with respect to a meridian plane "m" is located on one side (left side of FIG. 1) of the first groove side surface 111 in the axial direction of the pneumatic tire 1. In addition, in the plurality of groove side surfaces 111 and 112 of the groove 110, the second groove side surface 112 located on the other side (right side of FIG. 1) in the axial direction of the pneumatic tire 1 with respect to the meridian surface "m" is located on the other side (right side of FIG. 1) of the first groove side surface 111 in the axial direction of the pneumatic tire 1. In the present specification, the meridian plane "m" refers to a plane perpendicular to the axial direction while passing through a center of the pneumatic tire 1. In other words, in each of the grooves 110, the second groove side surface 112 is disposed to be farther from the meridian surface "m" than the first groove side surface 111 in the axial direction of the pneumatic tire 1.

In addition, the first groove side surface 111 and the second groove side surface 112 are inclined so that a gap therebetween decreases in a direction closer to the groove bottom surface 113. For example, an angle "g" at which the first groove side surface 111 and the second groove side surface 112 are inclined may be in a range of 5° to 30° with respect to the radial direction of the pneumatic tire 1. In other words, the angle "g" formed between each of the first groove side surface 111 and the second groove side surface 112 and the meridian surface "m" may be in a range of 5° to 30°. In addition, the plurality of groove side surfaces 111 and 112 include connection curved surfaces 111a and 112a and inclined surfaces 111b and 112b, respectively.

As described above, the connection curved surfaces 111a and 112a are portions of the groove side surfaces that are connected to the groove bottom surface 113 and formed with a predetermined curvature. The connection curved surfaces 111a and 112a support the noise reflector 200. The first groove side surface 111 includes the first connection curved surface 111a connected to the groove bottom surface 113, and the second groove side surface 112 includes the second connection curved surface 112a connected to the groove bottom surface 113.

The inclined surfaces 111b and 112b may be located between the connection curved surfaces 111a and 112a and the surface of the tread portion 100. In addition, the inclined surfaces 111b and 112b are surfaces that may be connected to a second connection unit 220b of the noise reflector 200 to be described below. In addition, the inclined surfaces 111b and 112b may be inclined to form the angle "g" with the meridian surface "m" as described above. In other words, the first groove side surface 111 includes the first inclined surface 111b connected to the first connection curved surface 111a, and the second groove side surface 112 includes the second inclined surface 112b connected to the second connection curved surface 112a. In addition, the first inclined surface 111b and the second inclined surface 112b are inclined so that an axial gap therebetween gradually decreases toward the groove bottom surface 113. For example, an angle "g1" between the first inclined surface 111b and the meridian surface "m" and an angle g2 between the second inclined surface 112b and the meridian surface "m" may be in a range of 5° to 30°. The angle "g1" and the angle "g2" may be the same or different from each other.

The groove bottom surface 113 are connected to the plurality of groove side surfaces 111 and 112 and may extend in a direction parallel to the surface of the tread portion 100. In other words, the groove bottom surface 113 may be located between the first groove side surface 111 and the second groove side surface 112.

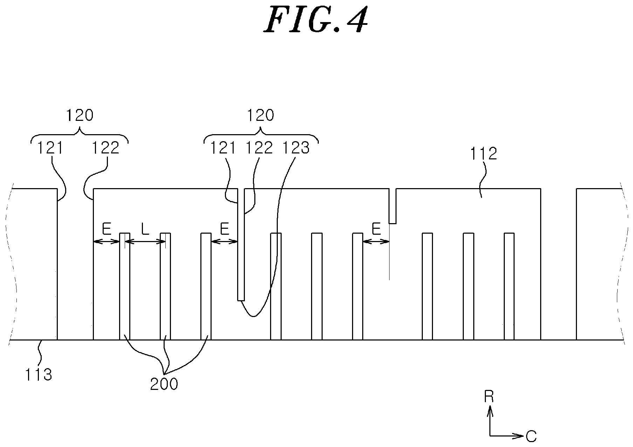

Referring further to FIG. 4, the sipe 120 may be recessed inwardly from the surface of the tread portion 100, and may be connected to the groove 110 by extending in a direction that deviates from a direction in which the groove 110 is extended. For example, the sipe 120 may extend in a direction close to the sidewall or in the axial direction of the pneumatic tire 1. In addition, a width of the sipe 120 perpendicular to an extension direction of the sipe 120 may be 1.0 mm or less. One side of the sipe 120 may be connected to the first groove side surface 111 or the second groove side surface 112 of the groove 110. In addition, the sipe 120 may be spaced apart from the noise reflector 200 in the circumferential direction of the pneumatic tire 1. In addition, some of the plurality of sipes 120 may be connected to one groove 110. The plurality of sipes 120 are connected to the groove 110, and thus, a plurality of pitches 130 may be formed on the surface of the tread portion 100. The plurality of noise reflectors 200 may be disposed between the plurality of sipes 120. In addition, the noise reflector 200 may be disposed to be spaced apart from the sipe 120 in the circumferential direction. For example, a gap "E" between the sipe 120 and the noise reflector 200 may be in a range between 1.5 mm and 3.0 mm. The gap "E" may be a gap between the sipe 120 and the noise reflector 200 formed closest to the sipe 120 among the plurality of noise reflectors 200. The sipe 120 may include a plurality of sipe side surfaces 121 and 122 and a sipe bottom surface 123.

The plurality of sipe side surfaces 121 and 122 may be recessed inward from the surface of the tread portion 10. In addition, the plurality of sipe side surfaces 121 and 122 may be connected to any one of the plurality of groove side surfaces 111 and 112. The gap "E" between the sipe 120 and the noise reflector 200 described above by the plurality of sipe side surfaces 121 and 122 may be a gap between any one of the plurality of noise reflector 200 and any one of the plurality of sipe side surfaces 121 and 122 formed closest thereto.

The sipe bottom surface 123 is connected to the plurality of sipe side surfaces 121 and 122 and may be formed in a direction parallel to the surface of the tread portion 100. In other words, the sipe bottom surface 123 may be located between the plurality of sipe bottom surfaces 123. At least a portion of the plurality of sipe bottom surfaces 123 may be disposed at different positions according to the length of the plurality of sipe side surfaces 121 and 122 being recessed from the surface of the tread portion 100. In other words, the sipe bottom surface 123 may be connected to any one of the plurality of groove side surfaces 111 and 112 or the groove bottom surface 113.

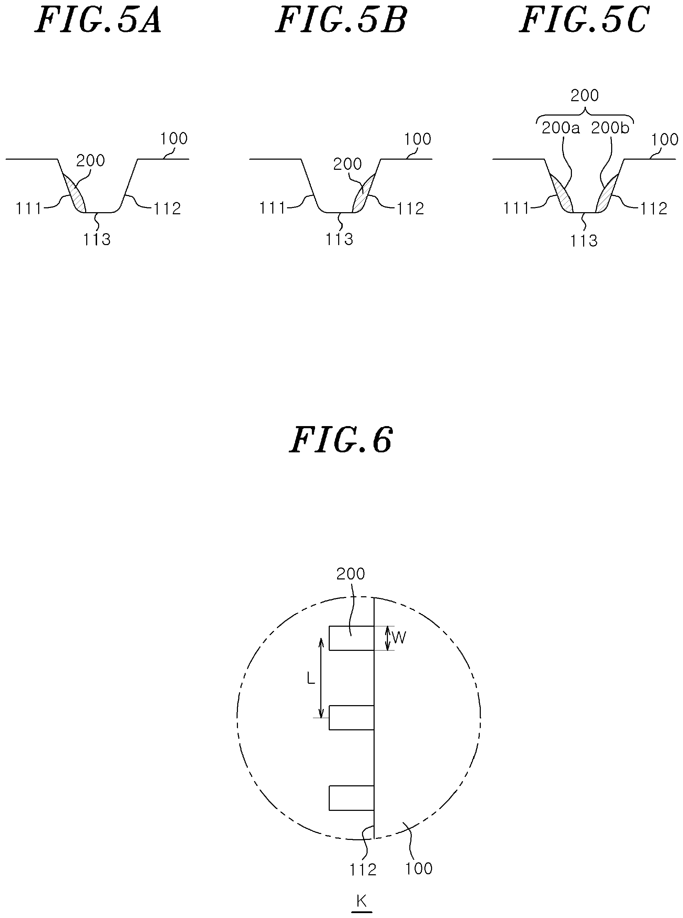

Referring further to FIGS. 5A to 5C, the noise reflector 200 may reduce noise by reducing pipe resonance generated by air flowing in the groove 110. The noise reflector 200 protrudes from the groove 110, and the plurality of noise reflectors 200 is provided and disposed to be spaced apart from each other along the circumferential direction of the pneumatic tire 1. In addition, the noise reflector 200 protrudes from at least one of the first groove side surface 111 and the second groove side surface 112. For example, the noise reflectors 200 may protrude from the first groove side surface 111 and the groove bottom surface 113 and may be spaced apart from each other along the circumferential direction of the pneumatic tire 1. As another example, the plurality of noise reflectors 200 may protrude from the second groove side surface 112 and the groove bottom surface 113 and may be spaced apart from each other along the circumferential direction of the pneumatic tire 1. As still another example, first noise reflectors 200a which are some of the plurality of noise reflectors 200 may protrude from the first groove side surface 111 and the groove bottom surface 113 and may be disposed to be spaced apart from each other along the circumferential direction of the pneumatic tire 1, and second noise reflectors 200b which are the remainder thereof may protrude from the second groove side surface 112 and the groove bottom surface 113 and may be spaced apart from each other along the circumferential direction of the pneumatic tire 1. In addition, the first noise reflectors 200a and the second noise reflectors 200b may be spaced apart from each other.

Referring further to FIGS. 3, 4 and 6, a height "b" of the noise reflector 200 is shown with respect to a length "B" from the surface of the tread portion 100 to the groove bottom surface 113 in the radial direction of the pneumatic tire 1. According to the invention, the height "b" of the noise reflector 200 is 65% or more and 75% or less of the length "B" from the surface of the tread portion 100 to the groove bottom surface 113 in the radial direction of the pneumatic tire 1. A thickness "W" of the noise reflector 200 in the circumferential direction of the pneumatic tire 1 may be 3% to 10% or less of a length of the gap between the plurality of sipes 120 or the pitch between the plurality of sipes 120, but is not limited thereto. For example, the thickness W of the noise reflector 200 may be in a range of 1.0 mm to 3.0 mm. In addition, the thickness W of the noise reflector 200 is less than a circumferential separation distance L between the centers of the plurality of noise reflectors 200. According to the invention, the circumferential separation distance L between the centers of the plurality of noise reflectors 200 is 1 or more times and less than 2 times the thickness "W" of the noise reflector 200. For example, the separation distance L may be 1.0 mm or more and 6.0 mm or less. In addition, the plurality of noise reflectors 200 may be disposed in the groove 110 in a number of 300 or more and 1000 or less. The noise reflector 200 may include a support surface 210 and a protrusion surface 220.

The support surface 210 is supported by the groove bottom surface 113 and one of the first groove side surface 111 and the second groove side surface 112. In addition, the support surface 210 may also be formed into a curved surface corresponding to the connection curved surfaces 111a and 112a. In other words, the support surface 210 is formed in a curved surface to be supported by the connection curved surfaces 111a and 112a, the inclined surfaces 111b and 112b, and the groove bottom surface 113. For example, the support surface 210 may be supported by the first connection curved surface 111a, the first inclined surface 111b, and the groove bottom surface 113, or may be supported by the second connection curved surface 112a, the second inclined surface 112b, and the groove bottom surface 113.

The protrusion surface 220 is located on a side opposite to the support surface 210 and may be spaced apart from the connection curved surfaces 111a and 112a. The protrusion surface 220 may be connected to the groove bottom surface 113 and one of the first groove side surface 111 and the second groove side surface 112. The protrusion surface 220 includes one side that is connected to the groove bottom surface 113 and the other side that is located on a side opposite to one side and connected to the first groove side surface 111 or the second groove side surface 112. Hereinafter, one side of the protrusion surface 220 will be referred to as a first connection portion 220a, and the other side of the protrusion surface 220 will be referred to as a second connection portion 220b. The first connection portion 220a and the second connection portion 220b of the protrusion surface 220 are connected to the support surface 210. In addition, the protrusion surface 220 includes a protruding curved surface having a shape that goes away from a first virtual surface "V", which is a virtual plane perpendicular to the groove bottom surface 113, toward an outer side in the radial direction of the pneumatic tire 1. In other words, the first connection portion 220a may be closer to the first virtual surface V than the second connection portion 220b. In addition, the protrusion surface 220 may be in contact with a second virtual surface "S", which is a virtual plane that is perpendicular to the groove bottom surface 113 and passes through the first connection portion 220a of the protrusion surface 220.

A length "a" from the second virtual surface "S" to the second connection portion 220b of the protrusion surface 220 based on the axial direction of the pneumatic tire 1 is 20% or more and 30% or less of a maximum gap "I" between the first groove side surface 111 and the second groove side surface 112. In other words, the noise reflector 200 is 20% or more and 30% or less of the maximum distance "I" between the first groove side surface 111 and the second groove side surface 112 and may protrude from the groove bottom surface 113 and any one of the first groove side surfaces 111 and the second groove side surface 112.

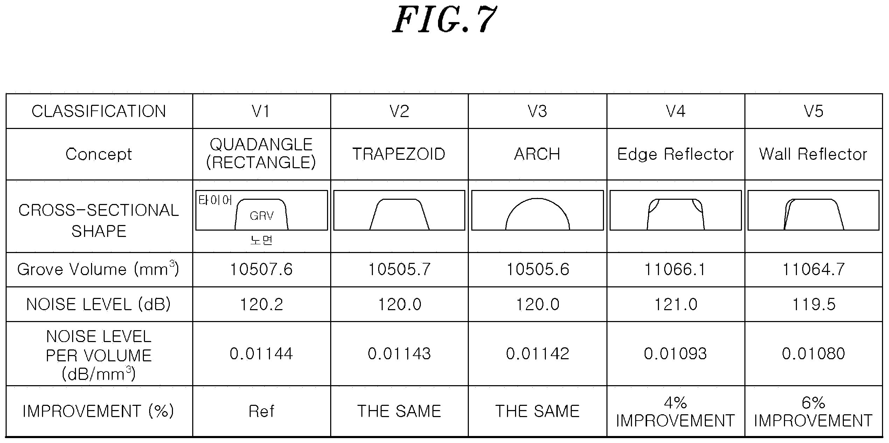

Hereinafter, operations and effects of the pneumatic tire 1 according to the first embodiment of the present invention will be described with further reference to FIGS. 7 to 9.

Since the noise reflector 200 is disposed in the groove 110 of the pneumatic tire 1 according to the first embodiment of the present invention, noise caused by the flow of air flowing in the groove 110 can be reduced.

V1, V2, and V3 illustrated in FIG. 7 are grooves having different shapes, and V4 and V5 are grooves in which different types of noise reflectors are disposed. Even when the shapes of the grooves are different, there is no change in a noise level and a noise level per unit volume. Meanwhile, as the noise reflector is provided, the noise level per unit volume was improved by 4% in V4 and by 6% or more in V5. In addition, in the noise level and the noise level per unit volume, V5 including the noise reflector formed long in the radial direction of the pneumatic tire 1 were further improved than V4. In other words, as the noise reflector 200 is provided on the groove bottom surface 113 and the groove side surfaces 111 and 112 as in V5, noise can be efficiently reduced.

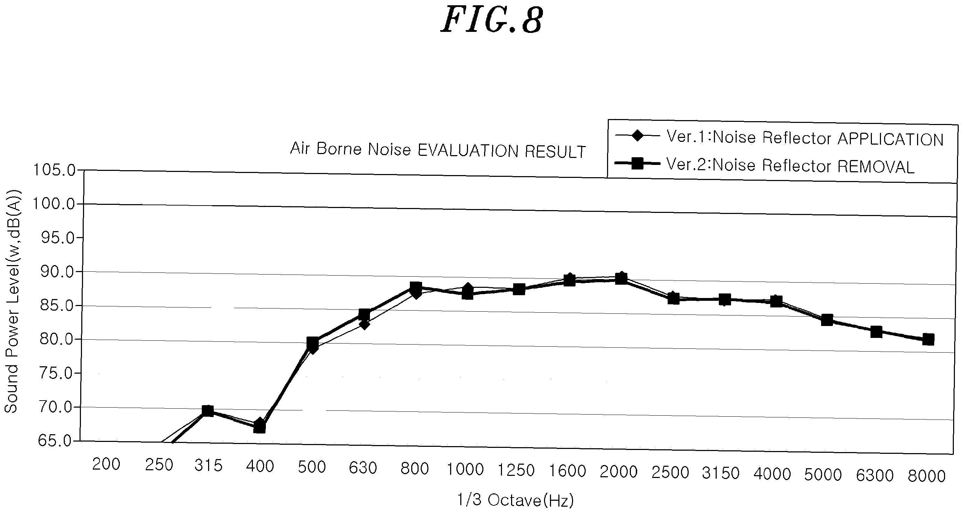

In addition, as illustrated in FIG. 8, when the noise reflector 200 is applied to the groove 110, noise can be reduced in a band of 500 hz to 800 hz than when the noise reflector 200 is not applied.

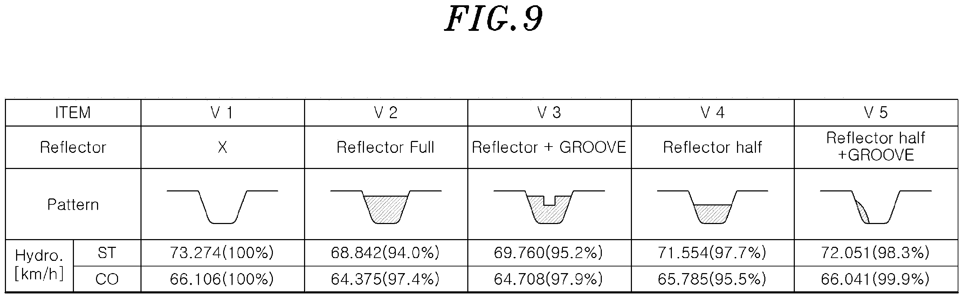

As illustrated in FIG. 9, even when the noise reflector 200 is disposed in the groove 110, drainage performance of the groove 110 is hardly affected. V1 illustrated in FIG. 9 represents the drainage performance of the tire in which the noise reflector is not present, and V5 represents the drainage performance of the tire to which the noise reflector 200 of the present invention is applied. In addition, V2, V3, and V4 represent the tire drainage performance in a state in which protrusions of different shapes are applied to the groove. ST represents tire drainage performance in a straight traveling state, and CO represents tire drainage performance in a cornering state. According to FIG. 9, it can be seen that V5 to which the noise reflector 200 of the present invention is applied has drainage performance better than those of V2, V3, and V4 in ST and CO states. In addition, the drainage performance of V5 may be close to the drainage performance of V1. In other words, even when the noise reflector 200 of the present invention is applied to the groove 110, the groove 110 can efficiently discharge water.

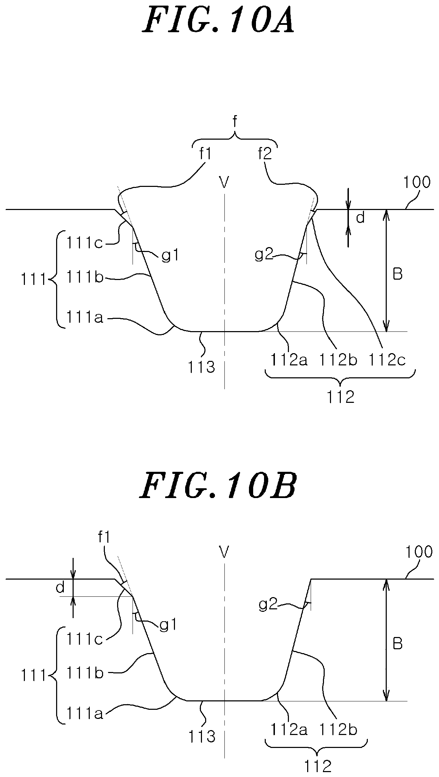

Hereinafter, a pneumatic tire 1 according to a second embodiment of the present invention will be described with reference to FIGS. 10A and 10B. As compared with the first embodiment described above, in the second embodiment of the present invention, at least one of the plurality of groove side surfaces 111 and 112 may further include surface connection surfaces 111c and 112c. Hereinafter, these differences will be mainly described, and the same description and reference numerals refer to the above-described embodiments.

The surface connection surfaces 111c and 112c may be located between the inclined surfaces 111b and 112b and the surface of the tread portion 100. A length "d" of each of the surface connection surfaces 111c and 112c in the radial direction of the pneumatic tire 1 may be 25% or less of a length "B" from the surface of the tread portion 100 to the groove bottom surface 113. In addition, the surface connection surfaces 111c and 112c may be inclined to be further away from the virtual surface "V" in order to form a predetermined angle "f" with the inclined surfaces 111b and 112b. For example, the angle "f" of each of the inclined surface connection surfaces 111c and 112c may be 30° or less based on the inclined surfaces 111b and 112b. In other words, the surface connection surfaces 111c and 112c may be inclined more than the inclined surfaces 111b and 112b with respect to the virtual surface "V".

These surface connection surfaces 111c and 112c may be included in one or more of the plurality of groove side surfaces 111 and 112. As an example, referring to Fig. 10A, the first groove side surface 111 may include a first surface connection surface 111c disposed between the first inclined surface 111b and the surface of the tread portion 100, and the second groove side surface 112 may include a second surface connection surface 112c disposed between the second inclined surface 112b and the surface of the tread portion 100. As another example, referring to Fig. 10B, the first groove side surface 111 may include a first surface connection surface 111c, and the second inclined surface 112b of the second groove side surface 112 may be directly connected to the surface of the tread portion 20. As still another example, the second groove side 112 may include a second surface connection surface 112c, and the first inclined surface 111b of the first groove side surface 111 may be directly connected to the surface of the tread portion 100. In addition, the angle "f1" between the first surface connection surface 111c and the first inclined surface 111b and the angle "f2" between the second surface connection surface 112c and the second inclined surface 112b may be formed equal to or different from each other.

Hereinafter, operation and effects of the pneumatic tire 1 according to the second embodiment of the present invention will be described.

When the noise reflector 200 is applied to the groove 110, an area of the groove 110 may be reduced, and thus, the drainage performance may be reduced compared to V1 as described above. When at least one of the plurality of groove side surfaces 111 and 112 includes the surface connection surfaces 111c and 112c, an area of the groove 110 can be further secured (the area is increased), and thus, reduced drainage performance can be supplemented.

The examples of the present invention have been described above as specific embodiments, but these are only examples, and the present invention is not limited thereto, and should be construed as having the widest scope as defined in the appended claims, taking into account the technical concept disclosed in the present specification. A person skilled in the art may combine/substitute the disclosed embodiments to implement a pattern of a shape that is not disclosed, but it also does not depart from the scope of the present invention as defined in the claims. In addition, those skilled in the art can easily change or modify the disclosed embodiments based on the present specification, and it is clear that such changes or modifications also belong to the scope of the present invention as defined in the claims.

## Claims

1. A pneumatic tire for reducing noise comprising:
a tread portion (100) including: a tread surface for making contacting with a road surface; and a groove (110) recessed inward from the tread surface and extending along a circumferential direction of the pneumatic tire; and
a plurality of noise reflectors (200) protruding from the groove (110) and disposed spaced apart from each other along the circumferential direction of the pneumatic tire,
wherein the groove (110) includes:
a groove bottom surface (113) spaced apart by a predetermined distance from the tread surface in a radial direction of the pneumatic tire; and
a plurality of groove side surfaces, including a first and a second groove side surfaces (111, 112), connected to the groove bottom surface (113), the groove side surfaces (111, 112) respectively including a first and a second connection curved surface (111a, 112a) having a predetermined curvature and a first and a second inclined surface (111b, 112b), respectively connected to the first and the second connection curved surface (111a, 1112a),
wherein each of the noise reflectors (200) includes:
a support surface (210) supported by the respective first and/or the second inclined surface (111b, 112b), the first and/or the second connection curved surface (111a, 112a) and the groove bottom surface (113); and
a protrusion surface (220) located on a side opposite to the support surface (210) and disposed to be spaced apart from the connection curved surface (111a, 112a), wherein one side of the protrusion surface (220) includes a first connection portion (220a) and the other side of the protrusion surface (220) includes a second connection portion (220b), and the first connection portion (220a) and the second connection portion (220b) are connected to the support surface (210),
wherein the protrusion surface (220) includes a protruding curved surface having a shape which goes away from a central virtual plane perpendicular to the groove bottom surface (113) as it goes from the groove bottom surface (113) toward an outer side in the radial direction of the pneumatic tire, and
wherein the pneumatic tire has a meridian plane passing through a center of the pneumatic tire and perpendicular to an axial direction of the tire,
the first groove side surface (111) and the second groove side surface (112) are inclined so that an axial gap therebetween decreases as it goes to the groove bottom surface (113) from the tread surface, and
each of the first groove side surface (111) and the second groove side surface (112) extends to be inclined with respect to the meridian surface,
**characterized in that**
an axial length "a" of the noise reflector (200) between the first connection portion (220a) and the second connection portion (220b) is 20% or more and 30% or less of a maximum distance "I" between the first groove side surface (111) and the second groove side surface (112) in the axial direction of the pneumatic tire,
a radial height "b" of the noise reflector (200) between the first connection portion (220a) and the second connection portion (220b) in the radial direction is 65% or more and 75% or less of a length "B" from the tread surface to the groove bottom surface (113) in the radial direction of the pneumatic tire, and
a separation distance "L" between centers of the adjacent noise reflectors (200) in the circumferential direction is 1 or more times and less than 2 times a thickness "W" of the noise reflector (200) in the circumferential direction.

2. The pneumatic tire of claim 1,
wherein the tread portion (100) further includes a sipe (120) recessed inward from the tread surface and extending in a direction deviating from an extension direction of the groove (110) to be connected to the groove (110), and
the noise reflector (200) is disposed to be spaced apart from the sipe (120) in the circumferential direction of the pneumatic tire.

3. The pneumatic tire of claim 2,
wherein a gap between the sipe (120) and the noise reflector (200) formed closest to the sipe (120) among the plurality of noise reflectors (200) is in a range between 1.5 mm and 3.0 mm.

## Patentansprüche

1. Luftreifen zur Reduzierung von Geräuschen, umfassend:
einen Profilabschnitt (100) mit: einer Profiloberfläche zur Herstellung eines Kontakts mit einer Straßenoberfläche; und einer Rille (110), die von der Profiloberfläche nach innen vertieft ist und sich entlang einer Umfangsrichtung des Luftreifens erstreckt; und
eine Mehrzahl von Geräuschreflektoren (200), die von der Rille (110) vorstehen und beabstandet voneinander entlang der Umfangsrichtung des Luftreifens angeordnet sind,
wobei die Rille (110) aufweist:
eine Rillenbodenoberfläche (113), die um einen vorbestimmten Abstand von der Profiloberfläche in einer radialen Richtung des Luftreifens beabstandet ist; und
eine Mehrzahl von Rillenseitenoberflächen, einschließlich einer ersten und
einer zweiten Rillenseitenoberfläche (111, 112), die mit der Rillenbodenoberfläche (113) verbunden sind, wobei die Rillenseitenoberflächen (111, 112) jeweils eine erste und eine zweite gekrümmte Verbindungsoberfläche (111a, 112a) mit einer vorbestimmten Krümmung und eine erste und eine zweite geneigte Oberfläche (111b, 112b), die jeweils mit der ersten und der zweiten gekrümmten Verbindungsoberfläche (111a, 112a) verbunden sind, aufweisen,
wobei jeder der Geräuschreflektoren (200) aufweist:
eine Stützoberfläche (210), die von der jeweiligen ersten und/oder der zweiten geneigten Oberfläche (111b, 112b), der ersten und/oder der zweiten gekrümmten Verbindungsoberfläche (111a, 112a) und der Rillenbodenoberfläche (113) gestützt wird; und
eine Vorsprungsoberfläche (220), die sich auf einer der Stützoberfläche (210) gegenüberliegenden Seite befindet und so angeordnet ist, dass sie von der gekrümmten Verbindungsoberfläche (111a, 112a) beabstandet ist, wobei eine Seite der Vorsprungsoberfläche (220) einen ersten Verbindungsabschnitt (220a) aufweist und die andere Seite der Vorsprungsoberfläche (220) einen zweiten Verbindungsabschnitt (220b) aufweist und der erste Verbindungsabschnitt (220a) und der zweite Verbindungsabschnitt (220b) mit der Stützoberfläche (210) verbunden sind,
wobei die Vorsprungsoberfläche (220) eine vorstehende gekrümmte Oberfläche mit einer Form aufweist, die sich von einer zentralen virtuellen Ebene weg senkrecht zu der Rillenbodenoberfläche (113) erstreckt, während sie sich von der Rillenbodenoberfläche (113) hin zu einer äußeren Seite in der radialen Richtung des Luftreifens erstreckt, und
wobei der Luftreifen eine Meridianebene aufweist, die durch das Zentrum des Luftreifens und senkrecht zu einer axialen Richtung des Reifens verläuft,
die erste Rillenseitenoberfläche (111) und die zweite Rillenseitenoberfläche (112) so geneigt sind, dass sich ein axialer Spalt dazwischen verringert, während er von der Profiloberfläche zu der Rillenbodenoberfläche (113) verläuft, und
sich sowohl die erste Rillenseitenoberfläche (111) als auch die zweite Rillenseitenoberfläche (112) so erstreckt, dass sie in Bezug auf die Meridianoberfläche geneigt ist,
**dadurch gekennzeichnet, dass**
eine axiale Länge "a" des Geräuschreflektors (200) zwischen dem ersten Verbindungsabschnitt (220a) und dem zweiten Verbindungsabschnitt (220b) 20 % oder mehr und 30 % oder weniger eines maximalen Abstands "I" zwischen der ersten Rillenseitenoberfläche (111) und der zweiten Rillenseitenoberfläche (112) in der axialen Richtung des Luftreifens beträgt,
eine radiale Höhe "b" des Geräuschreflektors (200) zwischen dem ersten Verbindungsabschnitt (220a) und dem zweiten Verbindungsabschnitt (220b) in der radialen Richtung 65 % oder mehr und 75 % oder weniger einer Länge "B" von der Profiloberfläche zu der Rillenbodenoberfläche (113) in der radialen Richtung des Luftreifens beträgt, und
ein Trennungsabstand "L" zwischen Zentren der benachbarten Geräuschreflektoren (200) in der Umfangsrichtung das 1- oder das Mehrfache und weniger als das 2-Fache einer Dicke "W" des Geräuschreflektors (200) in der Umfangsrichtung beträgt.

2. Luftreifen nach Anspruch 1,
wobei der Profilabschnitt (100) ferner eine Lamelle (120) aufweist, die von der Profiloberfläche nach innen vertieft ist und sich in einer Richtung erstreckt, die von einer Erstreckungsrichtung der Rille (110) so abweicht, dass sie mit der Rille (110) verbunden ist, und
der Geräuschreflektor (200) so angeordnet ist, dass er von der Lamelle (120) in Umfangsrichtung des Luftreifens beabstandet ist.

3. Luftreifen nach Anspruch 2,
wobei ein Spalt zwischen der Lamelle (120) und dem Geräuschreflektor (200), der unter der Mehrzahl von Geräuschreflektoren (200) am nächsten zu der Lamelle (120) ausgebildet ist, in einem Bereich zwischen 1,5 mm und 3,0 mm liegt.

## Revendications

1. Pneumatique permettant une réduction de bruit, comprenant :
une partie de bande de roulement (100) comportant : une surface de bande de roulement destinée à venir en contact avec une surface de chaussée ; et une rainure (110) ménagée à la surface de la bande de roulement et s'étendant dans la direction circonférentielle du pneumatique ; et
une pluralité de réflecteurs de bruit (200) faisant saillie depuis la rainure (110) et espacés l'un de l'autre dans la direction circonférentielle du pneumatique,
où la rainure (110) présente :
une surface de fond de rainure (113) espacée d'une distance définie de la surface de bande de roulement dans une direction radiale du pneumatique ; et
une pluralité de surfaces latérales de rainure, présentant une première et une deuxième surfaces latérales de rainure (111, 112), reliées à la surface de fond de rainure (113), lesdites surfaces latérales de rainure (111, 112) présentant une première et une deuxième surfaces de raccord incurvées (111a, 112a) respectives de courbure définie, et une première et une deuxième surfaces inclinées (111b, 112b), reliées respectivement à la première et à la deuxième surface de raccord incurvée (111a, 1112a),
où chacun des réflecteurs de bruit (200) présente :
une surface de support (210) supportée par la première et/ou par la deuxième surface inclinée (111b, 112b) respective, la première et/ou la deuxième surfaces de raccord incurvées (111a, 112a) et la surface de fond de rainure (113) ; et
une surface de saillie (220) présentée sur un côté opposé à la surface de support (210) et
disposée de manière à être espacée de la surface de raccord incurvée (111a, 112a), un côté de ladite surface de saillie (220) présentant une première partie de raccord (220a), et l'autre côté de la surface de saillie (220) présentant une deuxième partie de raccord (220b), et la première partie de raccord (220a) et la deuxième partie de raccord (220b) étant raccordées à la surface de support (210),
où la surface de saillie (220) comporte une surface en saillie courbe ayant une forme s'éloignant d'un plan central virtuel perpendiculaire à la surface de fond de rainure (113) à mesure qu'elle progresse depuis la surface de fond de rainure (113) vers un côté extérieur dans la direction radiale du pneumatique, et
où le pneumatique a un plan médian passant par le centre du pneumatique et perpendiculaire à la direction axiale du pneumatique,
la première surface latérale de rainure (111) et la deuxième surface latérale de rainure (112) sont inclinées de sorte qu'un espacement axial entre elles diminue à mesure qu'elle progresse vers la surface de fond de rainure (113) depuis la surface de bande de roulement, et
la première surface latérale de rainure (111) et la deuxième surface latérale de rainure (112) s'étendent chacune avec une inclinaison par rapport à la surface médiane,
**caractérisé**
**en ce qu'**une longueur axiale "a" du réflecteur de bruit (200) entre la première partie de raccord (220a) et la deuxième partie de raccord (220b) est comprise entre 20 % et 30 % d'une distance maximale "I" entre la première surface latérale de rainure (111) et la deuxième surface latérale de rainure (112) dans la direction axiale du pneumatique,
une hauteur radiale "b" du réflecteur de bruit (200) entre la première partie de raccord (220a) et la deuxième partie de raccord (220b) dans la direction radiale est comprise entre 65 % et 75 % d'une longueur "B" de la surface de bande de roulement à la surface de fond de rainure (113) dans la direction radiale du pneumatique, et
une distance de séparation "L" entre centres de réflecteurs de bruit (200) adjacents dans la direction circonférentielle est comprise entre 1 et 2 fois une épaisseur "W" du réflecteur de bruit (200) dans la direction circonférentielle.

2. Pneumatique selon la revendication 1,
où la partie de bande de roulement (100) présente une entaille (120) ménagée à la surface de bande de roulement et s'étendant dans une direction déviant d'une direction d'extension de la rainure (110) pour être reliée à la rainure (110), et où
le réflecteur de bruit (200) est disposé de manière à être espacé de l'entaille (120) dans la direction circonférentielle du pneumatique.

3. Pneumatique selon la revendication 2,
où un espacement entre l'entaille (120) et le réflecteur de bruit (200) le plus proche de l'entaille (120) parmi la pluralité de réflecteurs de bruit (200) est compris entre 1,5 mm et 3,0 mm.
